# EUROPEAN PATENT APPLICATION

(11) **EP 1 728 846 A1**
(43) Date of publication of application: **06.12.2006**
(21) Application number: 05291162.5
(22) Date of filing: 30.05.2005
(51) Int. Cl.: C10L 1/02, C11C 3/10

(54) **A new biodiesel composition**

(71) Applicant: Monsanto S.A.S., 69673 Lyon Cedex (FR)
(72) Inventor: Despeghel, Jean-Pierre, 45140 Ingre (FR)
(74) Representative: Van Malderen, Joëlle

(57) **Abstract**

The present invention relates to a novel alkyl-ester(s) composition derived from rapeseed and sunflower, in particular from Brassica napus and Helianthus annuus.

The present invention also to a process for the preparation of said novel alkyl-ester(s) composition.

It also relates to the use of said composition in diesel engines in its pure form or blended with another composition, e.g. with fuel.

## Description

### Field of the invention

The present invention relates to a new alkyl esters composition. The present invention further relates to a process to obtain said new composition and its use as biodiesel.

### Background

For years, biodiesel has been considered as an alternative to petroleum based diesel. Biodiesel is a general term referring to a fuel comprised of mono-alkyl esters of long chain fatty acids derived from vegetable oils or animal fats. It can be used per se as fuel or as an additive, generally in a blend with petroleum-based diesel fuel.

The numerous advantages of using Biodiesel are well known. Indeed, it offers similar fuel economy, horsepower and torque to petroleum diesel while providing superior lubricity. Its use results in a substantial reduction of emissions of unburned hydrocarbons, carbon monoxide, and particulate matter. Moreover, it is essentially free of sulfur and aromatics.

Biodiesel is therefore regarded as a renewable, non-toxic and biodegradable fuel alternative or additive.

Nowadays biodiesel has to satisfy very strict specifications to insure proper performance. Indeed, the pure biodiesel (B100) must meet a standard, through many specified parameters, before being used as a pure fuel or being blended with petrodiesel.

Some of these specifications refer to the temperature properties of biodiesel, such as the flash point, the cetane number, the cloud point, etc., some others refer to its composition, such as glycerine content, water and sediment content, sulphated ash content, phosphorus content, etc., and some others measure the acid number, the kinematic viscosity, etc.

Because of the current environmental and security concerns, there have been many attempts to improve biodiesel and/or the methods for its preparation.

But the main drawbacks with biodiesel products remain their temperature properties and also their reactivity toward oxidation and polymerization.

There is a high demand of a biofuel composition which overcomes or mitigates the problems of prior art biofuels.

The Australian document available on the internet (http://www.biodivereity.ea.gov.au/atmosphere/biodiesel/pubs/pa per.pdf), mentions new high oleic rapeseed varieties and also new low linolenic varieties as potential varieties to be used for biodiesel.

Nevertheless, having regard to the fatty acids composition of an oil or fat used for the production of biodiesel, it is generally admitted that the more saturated fatty acids, i.e. palmitic acid (16:0), and/or stearic acid (18:0) that are present:
- the higher the biodiesel stability (oxidation stability, thermal and storage stability);
- the lower the probability to form polymerised molecules under high temperatures and pressure (e.g. when unburned traces of biodiesel are washed down into the engine crankcase and exposed to high stress levels caused by high temperature and pressures);
- the higher the cetane-number for better engine performance.

It is also admitted that the presence of linolenic acid methyl ester in biodiesel increases the rate of biodiesel polymerisation adversely affecting engine operability. But in the meantime, its total absence in oil generates a drop of the cloud point or cold filter plugging point (CFPP).

### Summary of the invention

The present invention is based on the surprising discovery that the transesterification of a vegetable oil showing low, or even very low, saturated fatty acids content may nevertheless be advantageous, particularly when said oil composition shows high or very high oleic acid content and/or low or very low linolenic acid content.

The present invention provides a new alkyl-ester(s) composition, derived from rapeseed oil and sunflower oil, said composition comprising less than (about) 7,5%, 7%, 6,5%, or 6%, preferably between (about) 7,5% and (about) 5%, more preferably between (about) 7% and (about) 5,5% of mono-alkyl-ester(s) of saturated fatty acids, based upon the total weight of the mono-alkyl-esters of fatty acids present in the composition.

The present invention also provides a new alkyl-ester(s) composition, derived from rapeseed oil and sunflower oil, said composition comprising more than (about) 72%, 75%, 80%, or 85%, preferably between (about) 70%, 72%, 75%, 80%, or 85% and (about) 90% of mono-alkyl-ester(s) of oleic acid, and less than (about) 7,5%, 7%, 6,5%, or 6% preferably between (about) 7,5% and (about) 5%, more preferably between (about) 7% and (about) 5,5% of mono-alkyl-ester(s) of saturated fatty acids, based upon the total weight of the mono-alkyl-esters of fatty acids present in the composition.

Also provided is a new alkyl-ester(s) composition derived from rapeseed oil and sunflower oil, which comprises less than (about) 4%, 3,5%, 3%, 2%, 1% or 0,5%, preferably between (about) 4% and 0,2%, more preferably between (about) 4% and (about) 0,5% of mono-alkyl-ester(s) of linolenic acid and less than (about) 7,5%, 7%, 6,5%, or 6%, preferably between (about) 7,5% and (about) 5%, more preferably between (about) 7% and (about) 5,5% of mono-alkyl-ester(s) of saturated fatty acids, based on the total weight of mono-alkyl-esters of fatty acids in the composition.

The present invention also provides a new alkyl-ester(s) composition derived from rapeseed oil and sunflower oil, comprising more than (about) 72%, 75%, 80%, or 85% preferably between (about) 70%, 72%, 75%, 80%, or 85% and (about) 90% of mono-alkyl-ester(s) of oleic acid, less than (about) 4%, 3,5%, 3%, 2%, 1,5%, 1%, or 0,5%, preferably between (about) 4% and 0,2%, more preferably between (about) 4% and (about) 0,5% of mono-alkyl ester(s) of linolenic acid, and less than (about) 7,5%, 7%, 6,5%, or 6% 5, preferably between (about) 7,5% and (about) 5%, more preferably between (about) 7% and (about) 5,5% of mono-alkyl-ester(s) of saturated fatty acids, based on the total weight of mono-alkyl-esters of fatty acids in the composition.

It is to be understood that any of the compositions of the present invention comprises further fatty acid esters that are characteristic of rapeseed oil and sunflower oil.

Another object of the invention is a process for preparing a composition of the present invention comprising the transesterification steps of respectively a rapeseed oil and a sunflower oil, or the transesterification seep of a blend of both oils.

Whether they are blended before the transesterification step or not, the ratio of rapeseed oil to sunflower oil is selected so that a blend of both oils comprises (or would comprise) less than (about) 7,5%, 7%, 6,5%, or 6%, preferably between (about) 7,5% and (about) 5%, more preferably between (about) 7% and (about) 5,5% of saturated fatty acids, based on the total weight of fatty acids in the oil.

Said blend of oil can further comprise at least (about) 72%, 75%, 80%, 85% preferably between (about) 70%, 72%, 75%, 80%, or 85% and (about) 90% of oleic acid and/or at most (about) 4%, 3,5%, 3%, 2%, 1,5%, 1%, or 0,5%, preferably between (about) 4% and 0,2%, more preferably between (about) 4% and (about) 0,5% of linolenic acid, based on the total weight of fatty acids in the oil.

Another object of the present invention is the use of a composition of the present invention in (diesel) engines, as biodiesel or as an additive in other compositions, e.g. fuels.

### Detailed description of the invention

The present invention relates to a new mono-alkyl ester(s) composition derived from rapeseed oil, more particularly from Brassica napus oil, and sunflower oil, more particularly Helianthus annuus oil, comprising less than (about) 7,5%, 7%, 6,5%, or 6% preferably between (about) 7% and (about) 5%, more preferably between (about) 7% and (about) 5,5% of mono-alkyl ester(s) of saturated fatty acids, based upon the total weight of the mono-alkyl esters of fatty acids present in the composition.

The present invention relates to a new mono-alkyl ester(s) composition derived from rapeseed oil and sunflower oil, comprising at least (about) 72%; 73%, 74%, 75%, 76%, 77%, 78%, 79%, 80%, 81%, 82%, 83%, 84%, 85%, 86%, 87%, 88%, 89%, or 90% of mono-alkyl ester(s) of oleic acid and less than (about) 7,5%, 7%, 6,5%, or 6% of mono-alkyl ester(s) of saturated fatty acids, based upon the total weight of the mono-alkyl esters of fatty acids present in the composition.

The present invention also relates to a alkyl-ester(s) composition derived from rapeseed oil and sunflower oil, said composition comprising less than (about) 4%, 3,5%, 3%, 2,5%, 2%, 1,5%, 1%, or 0,5% of mono-alkyl esters of linolenic acid and less than (about) 7,5%, 7%, 6,5%, or 6% of mono-alkyl ester(s) of saturated fatty acids, based on che total weight of mono-alkyl esters of fatty acids in the composition.

The present invention also relates to a new alkyl-ester(s) composition derived from rapeseed oil and sunflower oil, comprising more than (about) 72%; 73%, 74%, 75%, 76%, 77%, 78%, 79%, 80%, 81%, 82%, 83%, 84%, 85%, 86%, 87%, 88%, 89%, or 90% of mono-alkyl ester(s) of oleic acid, less than (about) 4%, 3,5%, 3%, 2,5%, 2%, 1,5%, 1%, or 0,5% of mono-alkyl ester(s) of linolenic acid, and less than (about) 7,5%, 7%, 6,5%, or 6% of mono-alkyl ester(s) of saturated fatty acids, based on the total weight of mono-alkyl-esters of fatty acids in the composition.

The present invention also relates to a new alkyl-ester(s) composition derived from rapeseed oil and sunflower oil, further comprising (having regard to anyone of the compositions of the invention) less than (about) 15%, 14%, 13%, 12%, 11%, 10%, 9% or 8%, preferably less than (about) 7%, 6%, 5%, 4% or 3%, more preferably between (about) 15% and (about) 2,5%, even more preferably between (about) 7% and (about) 2,5% of mono-alkyl ester(s) of linoleic acid, and/or less than (about) 20%, 19%, 18%, 17% or 16%, preferably less than (about) 7%, 6%, 5%, 4% or 3%, more preferably between (about) 20% and (about) 2,5%, even more preferably between (about) 7% and (about) 2,5% of mono-alkyl ester(s) of poly-unsaturated fatty acids, based on the total weight of mono-alkyl-esters of fatty acids in the composition.

The present invention also relates to a new alkyl-ester(s) composition derived from rapeseed oil and sunflower oil, comprising between (about) 7,5% and (about) 5%, preferably between (about) 7% and (about) 5,5%, more preferably between (about) 6,5% and (about) 5,5% of mono-alkyl ester of saturated fatty acids. Said alkyl-ester(s) composition may further comprise between (about) 72% and (about) 90%, preferably between (about) 75% and (about) 89,5%, more preferably between (about) 80% and (about) 88% of mono-alkyl ester of oleic acid, and/or between (about) 4% and 0,2%, preferably between (about) 4% and (about) 0,5%, more preferably between (about) 3% and (about) 1% of mono-alkyl ester of linolenic acid, and/or between (about) 15% and (about) 2,5%, preferably between (about) 10% and (about) 3% of mono-alkyl ester of linoleic acid, and/or between (about) 20% and (about) 2,5%, preferably between (about) 15% and (about) 3% of mono-alkyl ester of poly-unsaturated fatty acids.

As used in the context of the present invention, the term "about" means +/- 0,3%, unless the context clearly dictates otherwise. For example, "about 7%" includes 6,7%, 6,8%, 6,9%, 7,1%, 7,2%, 7,3% and any real number comprised between 6,7% and 7,3%.

In a preferred composition of the invention, the mono-alkyl esters of said saturated fatty acids comprise less than (about) 4,5%, preferably less than (about) 4%, or less than (about) 3,5%, more preferably between (about) 4,5% and (about) 3,2% of alkyl-ester(s) of palmitic acid, based on the total weight of mono-alkyl-esters of fatty acids in the composition.

In a preferred composition of the invention, the mono-alkyl esters of said saturated fatty acids comprise between (about) 4,5% and (about) 3,2%, preferably between (about) 4% and (about) 3,5% of alkyl-escer(s) of palmitic acid, based on the total weight of mono- alkyl -asters of fatty acids in the composition.

In a preferred composition of the invention, the mono-alkyl esters of said saturated fatty acids comprise less than (about) 4%, 3% or 2% and preferably between (about) 4% and (about) 1,5% of alkyl-ester(s) of stearic acid, based on the total weight of mono-alkyl-esters of fatty acids in the composition.

In a preferred composition of the invention, the mono-alkyl esters of fatty acids are methyl ester, ethyl ester, propyl ester, or butyl ester of fatty acids. They may also consist of a mixture of two, three or four of said esters.

In a more preferred composition, the mono-alkyl esters of fatty acids are ethyl ester and / or methyl ester of fatty acids, and more preferably methyl ester of fatty acids.

In a preferred composition, the mono-alkyl esters of saturated fatty acids are methyl esters, ethyl esters, propyl esters or butyl esters of saturated fatty acids. They may also consist of a mixture of two, three or four of said esters.

In a preferred composition, the mono-alkyl esters of oleic acid are methyl ester, ethyl ester, propyl ester or butyl ester of oleic acid. They may also consist of a mixture of two, three or four of said esters.

In a preferred composition, the mono-alkyl esters of linolenic acid are methyl ester, ethyl ester, propyl ester, or butyl ester of linolenic acid. They may also consist of a mixture of two, three or four of said esters.

In a more preferred composition, the mono-alkyl esters of saturated fatty acids, of oleic acid or of linolenic acid are respectively methyl esters, and/or ethyl esters of said fatty acids.

And even more preferably, the mono-alkyl esters are methyl esters of saturated fatty acids, of oleic acid or of linolenic acid.

A preferred composition of the invention comprises less than (about) 7,5% of ethyl esters of saturated fatty acids based on the total weight of alkyl esters of fatty acids in the composition.

A preferred composition of the invention comprises more than (about) 73% of ethyl ester of oleic acid and less than (about) 7,5% of ethyl esters of saturated fatty acids based on the total weight of alkyl esters of fatty acids in the composition.

A preferred composition of the invention comprises less than (about) 4% of ethyl ester of linolenic acid and less than (about) 7,5% of ethyl esters of saturated fatty acids based on the total weight of alkyl esters of fatty acids in the composition.

A preferred composition of the invention comprises less than (about) 7,5% of methyl esters of saturated fatty acids, based on the total weight of alkyl esters of fatty acids in the composition.

A preferred composition of the invention comprises more than (about) 73% of methyl ester of oleic acid and/or less than (about) 4% of methyl ester of linolenic acid, and less than (about) 7,5% of methyl esters of saturated fatty acids, based on the total weight of alkyl esters of fatty acids in the composition.

A more preferred composition of the invention comprises more than (about) 80% of methyl ester of oleic acid and/or less than (about) 3% of methyl ester of linolenic acid, and less than (about) 7% of methyl esters of saturated fatty acids, based on the total weight of alkyl esters of fatty acids in the composition.

A preferred composition of the invention comprises less than (about) 3%, 2%, 1,5%, or less than (about) 1%, preferably between (about) 3% and (about) 0,5% of methyl ester of linolenic acid and less than (about) 7% of methyl esters of saturated fatty acids, based on the total weight of alkyl esters of fatty acids in the composition.

A preferred composition of the invention comprises:
- between (about) 75% and (about) 90%, preferably between (about) 80% and (about) 89,5% of methyl ester of oleic acid, and/or
- between (about) 4% and 0,2%, preferably between (about) 4% and (about) 0,5%, more preferably between (about) 2% and (about) 0,5% of methyl ester of linolenic acid, and
- less than (about) 7,5%, preferably between (about) 7,5% and (about) 5%, more preferably between (about) 7% and (about) 5,5% of methyl esters of saturated fatty acids,
based on the total weight of alkyl esters of fatty acids in the composition.

The present invention also relates to a new alkyl-ester(s) composition derived from rapeseed oil and sunflower oil, comprising more than (about) 72%; 73%, 74%, 75%, 76%, 77%, 78%, 79%, 80%, 81%, 82%, 83%, 84%, 85%, 86%, 87%, 88%, 89%, or 90% of mono-alkyl ester(s) of oleic acid and/or less than (about) 4%, 3,5%, 3%, 2,5%, 2%, 1,5% 1% or 0,5% of mono-alkyl ester(s) of linolenic acid, and less than (about) 7,5%, 7% or 6% of mono-alkyl esters of saturated fatty acids, and less than (about) 15%, 14%, 13%, 12%, 11%, 10%, 9% or 8%, preferably less than (about) 7%, 6%, 5%, 4%, or 3% of mono-alkyl ester(s) of linoleic acid based on the total weight of mono-alkyl-esters of fatty acids in the composition.

A preferred alkyl-ester(s) composition of the invention may comprise more than (about) 75% of mono-alkyl ester(s) of oleic acid, less than (about) 4% of mono-alkyl ester(s) of linolenic acid, and less than (about) 7,5% of mono-alkyl ester(s) of saturated fatty acids. It may further comprise less than (about) 13% of mono-alkyl ester(s) of linoleic acid, and/or less than (about) 16% of mono-alkyl ester(s) of poly-unsaturated fatty acids, based on the total weight of mono-alkyl-esters of fatty acids in the composition.

A preferred alkyl-ester(s) composition of the invention comprises more than (about) 85% of mono-alkyl ester(s) of oleic acid, less than (about) 2% of mono-alkyl ester(s) of linolenic acid, less than (about) 6,5% of mono-alkyl ester(s) of saturated fatty acids, based on the total weight of mono-alkyl-esters of fatty acids in the composition.

A process for preparing a composition according to the invention comprises transesterification steps of respectively a rapeseed oil and a sunflower oil, or a transesterification step of a blend of both oils.

A composition according to the invention can result from a process comprising a transesterification step of each oil performed separately (rapeseed oil and sunflower oil), the resulting esters are then mixed in a further step, or can result from a process comprising a transesterification step of a blend of both oils.

More particularly, a process for the preparation of an alkyl-ester composition according to the invention comprises a transesterification step of an oil extracted from at least one variety or species of rapeseed and a transesterification step of an oil extracted from at least one variety or species of sunflower, wherein the ratio of rapeseed oil co sunflower oil is selected such that, if they are/were mixed, a blend of both oils (would) comprise(s) less than 7,5%, 7%, 6,5%, 6% or 5,5% of saturated fatty acids, based on the total weight of the fatty acids in the oil.

Alternatively, a process for the preparation of an alkyl-ester composition according to the invention can comprise a transesterification step of a blend of oils extracted from at least one variety or species of rapeseed and from at least one variety or species of sunflower, wherein the ratio of rapeseed oil to sunflower oil is selected such that, said blend of both oils comprises less than 7,5%, 7%, 6,5%, 6% or 5,5% of saturated fatty acids, based on the total weight of the fatty acids in the oil.

The ratio of rapeseed oil to sunflower oil can be chosen in order to obtain, if they are/were mixed, a blend of both oils that (would) further comprise(s) :
- more than (about) 72%; 73%, 74%, 75%, 76%, 77%, 78%, 79%, 80%, 81%, 82%, 83%, 84%, 85%, 86%, 87%, 88% or 89% of oleic acid and/or
- less than (about) 4%, 3,5%, 3%, 2%, 1% or 0,5% of linolenic acid,
based upon the total weight of fatty acids present in the oil.

The transesterification may consist of a base catalysed transesterification of the oil. This reaction is more commonly used today, since it requires low temperature and pressure conditions, and it yields very high conversion with minimal side reactions and minimal reaction time. Moreover, it is a direct conversion to mono-alkyl ester with no intermediate compounds.

The catalyst is generally sodium hydroxide or potassium hydroxide. It is generally dissolved in the alcohol(s) using a standard agitator or mixer.

The alcohol (s) can be methanol, ethanol, propanol and/or butanol. Excess alcohol is normally used to ensure total conversion of the oil to its esters.

The alcohol(s) / catalyst mix is then charged into a closed reaction vessel and the oil is added.

The system should be closed to the atmosphere to prevent the loss of the alcohol(s).

The reaction time may vary, generally from 1 to 8 hours, depending on the temperature. The temperature is preferably chosen in the range consisting of the room temperature up to the temperature just above the boiling point of the alcohol used.

The conversion can be repeated (twice, three times or more) in order to raise the yield and obtain the required degree of purity, and to get very low glycerides content.

Once the reaction is complete, two phases containing respectively glycerin and alkyl esters can be separated. The glycerin phase being much more dense than the other, the two phases can be separated using merely the gravity, or faster by using a centrifuge.

Each of the phases has substantial amount of the excess alcohol(s) that was used in the reaction. This excess alcohol(s) can be removed by any appropriate process, for example with a flash evaporation process or by distillation.

The products of the reaction can be neutralized before or after the two phases, containing respectively glycerin and esters, are separated. This neutralization step can also take place before or after the alcohol(s) is (are) removed in each phase.

The alkyl esters composition thus obtained can be washed gently with warm water to remove residual catalyst or soaps.

It can also be distilled in an additional step to remove small amounts of colour bodies to produce a colourless composition.

The glycerin by-product can be submitted to further steps depending on the applications envisaged and the degree of purity required.

In a preferred embodiment, the alcohol used is methanol or ethanol. A mixture of both can be used and the ester composition obtained is thus a mixture of methyl ester and ethyl ester of fatty acids.

In a more preferred embodiment, methanol is used. And when methanol is used the transesterification step can be referred to as a methanolyse step.

The transesterification may also consist of a direct acid catalysed transesterification of the oil.

The alcohol can be methanol, ethanol, propanol and/or butanol.

In a preferred embodiment, the alcohol used is methanol, ethanol or a mixture of both.

Where methanol is used, the transesterification step can also be referred to as a methanolyse step.

The transesterification may also consist of a two steps reaction, the first being the conversion of the oil to its fatty acids, and then the conversion of the fatty acids to alkyl esters with acid catalysis.

The alcohol can be methanol, ethanol, propanol and/or butanol.

In a preferred embodiment, the alcohol used is methanol, ethanol or a mixture of both. The transesterification step can also be referred to as a methanolyse step where methanol is used.

Whatever are the catalysts used and/or the alcohols used, the oil used in a process of the invention comes from a rapeseed oil and a sunflower oil, extracted from the seeds of one or more varieties of rapeseed and one or more varieties of sunflower.

Said rapeseed oil and said sunflower oil can be submitted to the transesterification step separately and the esters obtained mixed afterwards. In that case, a process according to the invention comprises the step of transesterification of each (kind of) oil (from each variety, from each species or from each genus) and the step of mixing the alkyl-esters obtained.

Alternatively, said rapeseed oil and said sunflower oil can be submitted to the transesterification step as a blend of oil. In that case, a process according to the invention comprises the step of mixing the different oils and the step of transesterification of the blend of oil.

In both cases, i.e. whether the mixing step is performed before the transesterification step or after, the ratio of rapeseed oil to sunflower oil can be chosen in order to obtain (when mixed) a blend of both oils that comprises less than (about) 7,5%, less than (about) 7% or less then (about) 6,5%, preferably between (about) 7,5% and (about) 5%, more preferably between (about) 7% and (about) 5,5% of saturated fatty acids, based upon the total weight of fatty acids present in the oil.

Preferably, the ratio of rapeseed oil to sunflower oil is chosen in order to obtain a blend of both oils that comprises at least (about) 72%; 73%, 74%, 75%, 76%, 77%, 78%, 79%, 80%, 81%, 82%, 83%, 84%, 85%, 86%, 87%, 88% or 89% of oleic acid and/or less than (about) 4%, 3,5%, 3%, 2%, 1% or 0,5% of linolenic acid, and less than (about) 7,5% or 7%, preferably less than (about) 6,5%, and more preferably less than (about) 6% of saturated fatty acids, based upon the total weight of fatty acids present in said blend of oil.

The ratio of rapeseed oil to sunflower oil can be chosen in order to obtain a blend of both oils that further comprises;
- less than (about) 15%, 14%, 13%, 12%, 11%, 10%, 9% or 8%, preferably less than (about) 7%, 6%, 5%, 4%, or 3%, more preferably comprised between (about) 7% and (about) 2,5% of linoleic acid, and/or
- less than (about) 20%, 19%, 18%, 17% or 16%, preferably less than (about) 15%, 14%, 13%, 12%, 11%, 10%, 9%, 8%, 7%, 6%, 5%, 4%, or 3%, more preferably comprised between (about) 15% and (about) 2,5% of poly-unsaturated fatty acids,
based upon the total weight of fatty acids present in the oil.

Preferably, the ratio of rapeseed oil to sunflower oil is chosen so that a blend of both oils has a saturated fatty acids content comprised between (about) 7,5% and (about) 5%, preferably between (about) 7% and (about) 5,5%, more preferably between (about) 6,5% and (about) 5,5% and further comprise between (about) 72% and (about) 90%, preferably between (about) 75% and (about) 89,5%, more preferably between (about) 80% and (about) 89% of oleic acid, and/or between (about) 4% and 0,2%, preferably between (about) 4% and (about) 0,5% of linolenic acid, and/or between (about) 15% and (about) 2,5% of linoleic acid, and/or between (about) 20% and (about) 2,5% of poly-unsaturated fatty acids, based upon the total weight of fatty acids present in the blend of oil.

Said ratio of rapeseed oil to sunflower oil can vary from 1:99 to 99:1, or from 5:95 to 95:5, any ratio between these extremes being envisaged for a composition according to the invention.

A process of the invention may also comprise a step of extracting the oil from the seeds.

Oil extraction methods are well known and can be mechanical, via solvents (generally hexane), via enzymes and/or by means of high pressure CO₂,

A rapeseed oil can be extracted from Brassica napus, Brassica rapa, Brassica carinata and/or Brassica juncea seeds varieties.

Preferably, said rapeseed oil is extracted from the seeds of Brassica napus CV oleifera Metzger.

More particularly, it can be extracted from varieties chosen from the group consisting of CARACAS, CONTACT, CABRIOLET, CALIDA, SPIRAL, MSP05, MSP11 and MSP13 varieties, which are registered varieties, MSP11 and MSP13 excepted.

MSP11 variety is maintained as a Budapest Treaty patent deposit with NCIMB under accession number NCIMB 41234 made July 9, 2004 by Monsanto S.A.S, Centre de Recherche de Boissay, 28310 Toury, France.

MSP13 variety is maintained as a Budapest Treaty patent deposit with NCIMB under accession number NCIMB 41237 made July 23, 2004 by Monsanto S.A.S, Centre de Recherche de Boissay, 28310 Toury, France.

MSP05 and CALIDA varieties are also maintained as a Budapest Treaty patent deposit with NCIMB respectively under accession number NCIMB 41233 and 41235 made July 9, 2004 by Monsanto S.A.S, Centre de Recherche de Boissay, 28310 Toury, France.

A mixture of the oil extracted from two, three, four, five, six, seven or eight of these varieties can also be used to prepare a composition of the invention.

A preferred rapeseed oil comprises more than (about) 73% of oleic acid and/or less than (about) 3,5% of linolenic acid, and less than (about) 7% of saturated fatty acids, based upon the total weight of fatty acids present in the oil.

A more preferred rapeseed oil comprises more than (about) 75% of oleic acid and/or less than (about) 3% of linolenic acid, and less than (about) 7% of saturated fatty acids, based upon the total weight of fatty acids present in the oil.

A more preferred rapeseed oil comprises more than (about) 75% of oleic acid and less than (about) 2,5% of linolenic acid, and less than (about) 7% of saturated fatty acids, based upon the total weight of fatty acids present in the oil.

A more preferred rapeseed oil comprises between (about) 75% and (about) 85% of oleic acid and/or between (about) 2,5% and (about) 1% of linolenic acid, and between (about) 7% and (about) 5%, preferably between (about) 7% and (about) 5,5% of saturated fatty acids, based upon the total weight of fatty acids present in the oil.

A variety from which such oil can be extracted may be chosen from the group consisting of MSP05, MSP11 and MSP13 varieties.

A more preferred rapeseed oil comprises more than (about) 80% of oleic acid and less than (about) 2% of linolenic acid, and less than (about) 7%, preferably less than (about) 6% of saturated fatty acids, based upon the total weight of fatty acids present in the oil.

A more preferred rapeseed oil comprises more than (about) 85% of oleic acid and/or less than (about) 2% of linolenic acid, and less than 6,5% of saturated fatty acids, based upon the total weight of fatty acids present in the oil.

A variety from which such oil can be extracted is for example MSP11 variety or MSP13 variety.

In a preferred rapeseed oil, the said saturated fatty acids comprise less than 4,5%, preferably less than (about) 4%, more preferably less than (about) 3,5% of palmitic acid based upon the total weight of fatty acids present in the oil.

In a preferred rapeseed oil, the said saturated fatty acids comprise between (about) 4,5% and (about) 3%, more preferably between (about) 4,1% and (about) 3,5% of palmitic acid based upon the total weight of fatty acids present in the oil.

A sunflower oil can be extracted from one, two or more high oleic sunflower seeds varieties. In particular it can be extracted from varieties chosen from the group consisting of ELANSOL and AURASOL.

A preferred sunflower oil comprises more than (about) 73%, 75% or 80% of oleic acid and/or (substantially) no linolenic acid (i.e. less than 0,1%), and less than (about) 8%, 7%, 6% or 5% of saturated fatty acids, based upon the total weight of fatty acids present in the oil.

A more preferred sunflower oil comprises more than (about) 85% of oleic acid and/or (substantially) no linolenic acid, and less than (about) 8% or 7% of saturated fatty acids, based upon the total weight of fatty acids present in the oil.

A more preferred sunflower oil comprises between (about) 75%, 80% or 85% and (about) 90% of oleic acid and/or (substantially) no linolenic acid, and between (about) 8% and (about) 7% of saturated fatty acids, based upon the total weight of fatty acids present in the oil.

A process of the invention may comprise, prior to the transesterification step, the steps of degumming the crude oil and of refining the resulting oil.

Crude oil is degummed to remove bulk of certain phosphatides such as lecithin.

The degumming treatment can consist of mixing the oil with water or steam during a certain period of time, preferably about 30 min. to about 60 min., at a temperature between about 50° and about 90°C, preferably in presence of phosphoric acid, citric acid or other acidic materials. The gummy residue is dehydrated and the precipitated gums are removed by decantation or centrifugation.

The degumming step may also consist of a chemical process.

The oil thus obtained is refined (or neutralized) in order to reduce the free fatty acids, phospholipids, carbohydrates or proteins.

The most widely practiced form of refining method is an alkali treatment, usually sodium hydroxide, by which the free fatty acids are converted into water soluble soaps. Phospholipids, carbohydrates and proteins can also be changed to water soluble substances with hydration.

After the alkali treatment, the oil is washed with (hot) water to remove residual water soluble soaps that can reduce stability of the oil. In addition, pigments of the oil, such as chlorophyll, also undergo partial decomposition during this step.

The refining step can also be referred to as a neutralization step.

A process of the invention may also comprise a bleaching step, after the refining step and before the transesterification step. In fact, a large amount of the colouring materials, such as chlorophyll and carotene, is already removed during the refining process. And the bleaching step aims to finalize the decolouration process.

A common method of bleaching is by absorption of the colour producing substances on an adsorbent material such as e.g. bentonite (or acid-activated earth clay), Fuller's earth, TONSIL earth, silica gel, etc.

In the degumming step, the refining step and/or the bleaching step, the term "oil" refers to one or more oils extracted from the seeds of one or more rapeseed varieties and/or one or more sunflower varieties. In other words, oil extracted from the seeds of one or more rapeseed varieties and oil extracted from the seeds of one or more sunflower varieties can be mixed before or after any of these steps.

A composition obtained by a process of the invention comprises less than (about) 7,5% 7%, 6,5% or 6%, preferably between (about) 7,5% and (about) 5%, more preferably between (about) 7% and (about) 5,5% of mono-alkyl-esters of saturated fatty acids, in particular methyl ester of saturated fatty acid, based on the total weight of mono-alkyl esters of fatty acids in the composition.

A composition obtained by a process of the invention comprises:
- more than (about) 72%; 73%, 79%, 75%, 76%, 77%, 78%, 79%, 80%, 81%, 82%, 83%, 84%, 85%, 86%, 87%, 88%, 89% or 90%, preferably between (about) 70%, 72%, 75%, 80% or 85% and (about) 90%, more preferably between (about) 75% and (about) 89,5% of mono-alkyl ester(s) of oleic acid, in particular methyl ester of oleic acid, and/or
- less than (about) 4%, 3,5%, 3%, 2,5%, 2%, 1,5%, 1%, or 0,5%, preferably between (about) 4% and 0,2%, more preferably between (about) 4% and (about) 0,5% of mono-alkyl ester(s) of linolenic acid, in particular methyl ester of linolenic acid,
- and less than (about) 7,5%, 7%, 6,5%, 6% or 5,5%, preferably between (about) 7,5% and (about) 5%, more preferably between (about) 7% and (about) 5,5% of mono-alkyl-esters of saturated fatty acids, in particular methyl ester of saturated fatty acid,
based on the total weight of mono-alkyl esters of fatty acids in the composition.

All the combinations are envisaged for a composition of the invention.

It is to be understood that any of the compositions of the present invention comprises further fatty acid esters resulting from the transesterification of further fatty acids that are present in the rapeseed oil and the sunflower oil used.

More particularly, a composition obtained by a process of the invention may also contain a certain amount, a small amount (i.e. less than (about) 4% or between (about) 0,5% and (about) 4% based on the total weight of mono-alkyl esters of fatty acids in the composition) or traces (i.e. less than 0,1% based on the total weight of mono-alkyl esters of fatty acids in the composition) of alkyl ester of palmitoleic acid, alkyl ester of stearic acid, alkyl ester of arachidic acid, alkyl ester of eicosenoic acid, alkyl ester of behenoic acid, alkyl ester of erucic acid, and/or mono-, di- and/or tri-glyderides.

A possible use of a composition according to the present invention is as biodiesel.

A composition of the invention suitable for this use preferably comprises less than (about) 7,5% or 7%, preferably less than (about) 6,5%, or 6% of methyl- and/or ethyl esters of saturated fatty acids, based on the total weight of alkyl esters of fatty acids in the composition.

A composition of the invention suitable for this use preferably comprises more than (about) 75% of methyl- and/or ethyl ester of oleic acid and less than (about) 7,5%, preferably less than (about) 7%, 6,5%, or 6% of methyl- and/or ethyl esters of saturated fatty acids, based on the total weight of alkyl esters of fatty acids in the composition.

A composition of the invention suitable for this use preferably comprises less than (about) 3% of methyl- and/or ethyl ester of linolenic acid and less than (about) 7,5%, or 7% preferably less than (about) 6,5%, or 6% of methyl- and/or ethyl esters of saturated fatty acids, based on the total weight of alkyl esters of fatty acids in the composition.

A composition of the invention suitable for this use preferably comprises more than (about) 72%; 73%, 74%, 75%, 76%, 77%, 78%, 79%, 80%, 81%, 82%, 83%, 84%, 85%, 86%, 87%, 88%, 89% or 90%, preferably between (about) 70%, 72%, 75%, 80% or 85% and (about) 90% of methyl- and/or ethyl ester of oleic acid, less than (about) 4%, 3,5%, 3%, 2,5%, 2%, 1,5%, 1%, or 0,5%, preferably between (about) 4% and (about) 0,5% of methyl- and/or ethyl ester of linolenic acid, and less than (about) 7,5% or 7% preferably less than (about) 6,5%, or 6%, preferably between (about) 7,5% and (about) 5%, more preferably between (about) 7% and (about) 5,5% of methyl- and/or ethyl esters of saturated fatty acids, based on the total weight of alkyl esters of fatty acids in the composition.

A composition of the invention suitable for this use preferably comprises more than (about) 75%, preferably between (about) 75% and (about) 90% of methyl- and/or ethyl ester of oleic acid and/or less than (about) 3%, preferably between (about) 3% and (about) 0,5% of methyl- and/or ethyl ester of linolenic acid, and less than (about) 7%, 6,5% or 6%, preferably between (about) 7% and (about) 5%, more preferably between (about) 7% and (about) 5,5% of methyl- and/or ethyl esters of saturated fatty acids, based on the total weight of alkyl esters of fatty acids in the composition.

A composition of the invention suitable for this use preferably comprises more than (about) 75% of methyl- and/or ethyl ester of oleic acid and less than (about) 3% of methyl- and/or ethyl ester of linolenic acid, and less than (about) 7% of methyl- and/or ethyl esters of saturated fatty acids, based on the total weight of alkyl esters of fatty acids in the composition.

A composition of the invention suitable for this use may also comprise less than (about) 15%, 14%, 13%, 12%, 11%, 10%, 9% or 8%, preferably less than (about) 7%, 6%, 5%, 4% or 3%, more preferably between (about) 15% and (about) 2,5%, even more preferably between (about) 7% and (about) 2,5% of methyl- and/or ethyl ester(s) of linoleic acid, based on the total weight of mono-alkyl-esters of fatty acids in the composition.

A composition of the invention suitable for this use may also comprise less than (about) 20%, 19%, 18%, 17% or 16%, preferably less than (about) 7%, 6%, 5%, 4% or 3%, more preferably between (about) 20% and (about) 2,5%, even more preferably between (about) 7% and (about) 2,5% of methyl- and/or ethyl ester(s) of poly-unsaturated fatty acids, based on the total weight of mono-alkyl-esters of fatty acids in the composition.

Prior to use as a commercial biodiesel, the composition of the invention must be analysed to ensure it meets the specifications established by the European Union, the American Society for Testing and Materials (ASTM) or other national or international instances.

The most important parameters (or specifications) can be summed up in the following table (Table I), together with the methods used in the examples section to measure said parameters.

**Table I**

| **Parameters** | **Methods** | **Units** |
|---|---|---|
| Ester content | HPLC | % mass |
| Cetane Number | L.C. NF EN ISO 5165 ASTM D 613 | - |
| Kinematic Viscosity (40 °C) | ISO 3104 | mm²/s |
| Pourpoint | ISO 3016 | °C |
| Water content | Karl-fisher | mg/kg |
| Acid Number | NF T 60-204 | mg KOH/g |
| Saponification Number | NF ISO 3657 | mg KOH/g |
| Iodine Value | NF ISO 3961 | g I₂/100 g |
| Peroxide Value | NF T 60 220 | meq O₂/kg |
| Unsaponifiable matter | NF T 60-205-1 | % |
| Glycerides content | HPLC | % |
| Linolenic acid methyl ester | Gas Chromatography | % |
| Free glycerol | HPLC | % |
| oxidation stability (110°C, 10 1/h - TIR | EN 14112 | hours |

More particularly, a composition of the invention comprising less than 7%, 6,5%, 6% or 5,5% of methyl esters of saturated fatty acids and further comprising more than 72% of methyl ester of oleic acid and/or less than 3% of methyl ester of linolenic acid, based on the total weight of alkyl esters of fatty acids in the composition, shows very good properties suitable for its use as biodiesel or as an additive in fuels. These properties are summed up in the following table (Table II).

**Table II**

| **Parameters** | **Preferred methyl ester composition of the inventio**n | **E.U. (prEN 14214)** | **USA (ASTM D6751-02)** | **Units** |
|---|---|---|---|---|
| Ester content | ≥96,5 | ≥96,5 | - | % mass |
| Cetane Number | 52,4 to 58,4 | ≥51 | ≥47 | - |
| Kinematic Viscosity (40 °C) | 3,5 to 5 | 3,5 to 5 | 1,9 to 6,0 | mm²/s |
| Pourpoint | -4,4 to -15,4 | ≤0 | | °C |
| Water content | ≤500 | ≤500 | - | mg/kg |
| Acid Number | ≤0,5 | ≤0,5 | ≤0,8 | mg KOH/g |
| Saponification Number | | - | - | mg KOH/g |
| Iodine Value | 80,9 to 103,6 | ≤120 | - | g I₂/100 g |
| Peroxide Value | | - | - | meq O₂/kg |
| Unsaponifiable matter | | - | - | % |
| Linolenic acid methyl ester | 0.1 to 4 | ≤12 | | % |
| Glycerides content | ≤1,2 | ≤1,2 | - | % |
| Free glycerol | ≤0,02 | ≤0,02 | ≤0,02 | % |
| Phosphorus content | ≤10 | ≤10 | ≤10 | mg/kg |
| Oxidation stability | ≥6 | ≥6 | - | hours |

Having regard to a methyl ester composition of the invention, few parameters can be noticed as remarkable, in particular the cetane number, the oxidation etability, the iodine value and the pour point of said composition.

The cetane number is a relative measure of the interval between the beginning of injection and auto-ignition of the fuel. The higher the number, the shorter the delay interval. Fuels with low cetane numbers will cause hard starting, rough operation, noise and exhaust smoke.

In view of its cetane number, a composition of the invention will help diesel engines to operate better.

The iodine value of an oil is normally associated with the potential for the oil to polymerise, as it is a measure of the proportion of unsaturated bonds. It is admitted that the use of biodiesel with an iodine number that exceeds 115 increases the risk that the engine lubricating oil will polymerise over time.

In view of the iodine value of a composition according to the present invention, the risk of polymerization will be drastically diminished when using said composition.

The good oxidation stability showed by the compositions of the invention means that the risks of generating hydroperoxide is diminished, preventing the peroxidation chain mechanism which damages the fuel system components. It is also an indication that the fuel darkening and the formation of insolubles, sediment and gum will be substantially attenuated.

The pour point of a composition of the invention indicates a good biodiesel cold weather performance.

An alkyl ester composition of the invention may also be used as a solvent, for example to dissolve petroleum.

The invention will be illustrated with further details in the following examples, which should not be construed as limiting the scope of the invention in any way.

### EXAMPLES

### Example 1: Oil extraction

### a). Mechanical extraction

The seeds are pressed in a single screw press, Täby 40A press, with a diameter of 6,5 mm, at a temperature comprised between about 40° and about 60°C.

The following varieties are pressed: CARACAS, CONTACT, CABRIOLET, CALIDA, SPIRAL, MSP05, MSP11, MSP13, ELANSOL and AURASOL varieties.

The result of that step is summarized in Table III.

In this example and in the following examples, the CARACAS variety is used as a point of reference.

It can be noted that the yields are very high, between about 70% and about 75%, except for CALIDA variety.

### b). Hexane extraction

### Material of extraction

Extractor 5L, a thermic bath and an extraction cartridge 13L

### Conditions of the extraction

The temperature of the bath is set at 82,5°C for a flow rate of hexane of about 2 L/h. The extraction process lasts about 16 hours. Because of the important amount of oil cake, the extraction process is repeated twice. The hexane contained in the cartridge is used again for second extraction, which lasts 17 hours.

The oil extracted mechanically, and the oil extracted with hexane are mixed and filtered on a settling in order to remove the solid particles. The oil is then distilled on a "R10" at a temperature of 90°C, 100 mbar during 1 hour. The flow rate of hexane is about 2 1/h. The residual content of hexane is about 4% to about 6%, which will facilitate the further steps of purification process.

The results of the extraction steps are summarized in Table IV.

### Example 2: Degumming step.

The degumming and the neutralization are both carried out in 10 litres temperature controlled reaction vessel.

In order to facilitate the degumming, mainly the decantation, the residual hexane content is adjusted at 6%.

The degumming step aims to remove the phospholipids naturally present in the crude oil.

The oil is introduced in the reaction vessel, then the temperature is raised up to 65°C while the oil is agitated. At 65°C, phosphoric acid (1,5%) and water (6% based on the oil weight) are added. The mixture is agitated during 10 min. and then the temperature is raised up to 75°C. The mixture is agitated at this temperature of 75°C during 30 min. Then, the decantation is allowed to proceed during 30 min. Finally, the heavier phase is removed.

The results of this step are summarized in Table V.

### Example 3: Refining or neutralization step.

This step aims to remove the free fatty acids present in the degummed oil.

The degummed oil is maintained at 75°C in a reaction vessel in which sodium hydroxide is added in excess of 10% compared to theoretical amount needed and the mixture is agitated during 5 min.

Then the temperature is raised up to 95°C and maintained at 95°C during 30 min. The reaction vessel is cooled down at 65°C and the two phases of the reaction mixture are allowed to separate by gravity during 20 min.

Then the aqueous phase is withdrawn (pH of 11-12) and the oil is washed with demineralized water until the used water is neutral.

The oil is then dried at 110°C under vacuum during 30 min.

The process and the results are summarized in Table VI.

The varieties have all a low acid number: below 1 mg KOH/g. Usually, the acid number of common rapeseed oil is about 2 to about 3,5 mg KOH/g.

With an acid number below 0,3 mg KOH/g, the degumming and refining steps are regarded as very efficient.

### Example 4: Bleaching step.

The refined oil is introduced in the reaction vessel with 3%, based on the weight of the oil, of TONSIL^{®} earth.

The temperature is raised up to 95°C under vacuum with a pressure of 200 mbar. After 15 min. the pressure is diminished to 100 mbar and then to 15 mbar after 10 min.

The decolouration continues at 95°C, 15 mbar during 2 hours, and then the temperature is reduced to a temperature of 60°C. At 60°C, 0,5% of promosil, based on the weight of the oil, is added to improve the filtration, which is carried out on a filter ("cloche" filter), at a flow rate of about 20L/h.

The oil is then cooled down with the ambient temperature during 1 hour and stored under nitrogen atmosphere.

The results of the bleaching step are summarized in Table VII.

The bleaching step using TONSIL earth has a small impact on the acid numbers, which are slightly higher in comparison with the acid numbers before this bleaching step.

### Example 5: Fatty acids content.

The fatty acids content of the oils extracted from the different rapeseed and sunflower varieties have been evaluated by gas chromatography and the results are summarized in Table VIII.

### Example 6: Methanolyse.

Approximately 2000 g of oil extracted from rapeseed and sunflower seeds, in a ratio of rapeseed oil to sunflower oil varying from 5:95 to 95:5.

The oil is degummed and refined according to the process described in examples 2 and 3, and then mixed with 300 g of methanol in a reaction vessel. About 5 to 10 g of sodium hydroxide added to the same reaction vessel.

The methanolyse takes place during about 2 hours, at a temperature comprised between approximately 40° C and 60° C, under atmospheric pressure.

These conditions provide essentially about 95 % conversion of added triglycerides to fatty acids methyl esters.

After the settling, the two phases of the reaction mixture are allowing to stand and separate to provide methyl esters in the upper phase, and a mixture of glycerol and approximately 2% wt. residual methyl esters, methanol, and base in the lower phase. The upper phase is used in a second conversion.

The same amount as in the first conversion of methanol and of alkaline catalyst is then introduced in the reaction vessel. The same conditions of temperature and pressure are applied (between about 40° and 60° C, atmospheric pressure). In these conditions more than 98 % of triglycerides are converted to fatty acids methyl esters.

The fatty acids methyl esters are washed and dried. More than 1900 g of fatty acids methyl esters are weighted, with a purity of higher than 98%. The mass yield, methyl esters / refined oil, is good.

The methyl esters content of the methyl ester composition obtained by the process as described has been evaluated by gas chromatography and the results are summarized in Table IX (which shows only the two extreme ratios, namely 5:95 and 95:5).

### Example 7: Specifications of a rapeseed methyl ester composition for use as biodiesel.

The rapeseed methyl ester composition obtained has been analysed and compared with the specifications of a biodiesel as established by the European Union. The results of such analysis are summed up in Table X (which shows five different ratios).

Currently, methyl esters of rapeseed oil are used with low methyl ester of oleic acid content. The cetane number measured for such biodiesel can hardly reach 51.

As shown in Table X, a methyl ester composition according to the invention has a very high quality, with a cetane number higher than 51 and an iodine value pretty below 120.

Preferred rapeseed variety to be used to prepare a methyl ester composition of the invention is MSP05

More preferred rapeseed varieties to be used to prepare a methyl ester composition of the invention are MSP11 and/or MSP13.

### TABLES

**Table III.**

| Varieties | CARACAS | CONTACT | CABRIOLET | CALIDA | SPIRAL | MSP05 | MSP11 | ELANSOL | AURASOL |
|---|---|---|---|---|---|---|---|---|---|
| Seeds, kg | 19,4 | 19,2 | 19,5 | 14,9 | 14,6 | 19,3 | 19,5 | 19,3 | 19,00 |
| Dry matter, kg | 18,3 | 17,8 | 18,3 | 14,0 | 13,8 | 18,2 | 10,3 | 18,2 | 17,8 |
| Theoretical oil, kg | 8,9 | 8,3 | 8,7 | 6,4 | 6,2 | 8,6 | 8,3 | 8,0 | 7,9 |
| Non filtered oil, kg | 6,8 | 6,7 | 6,5 | 3,8 | 4,7 | 6,4 | 6,6 | 6,6 | 6,6 |
| Yield, % | 76,1 | 80,2 | 74,5 | 59,4 | 75,7 | 74,7 | 79,7 | 83,0 | 83,2 |
| Oil cake, kg | 11,9 | 12,3 | 12,8 | 10,3 | 9,7 | 12,7 | 13,0 | 12,2 | 12,4 |
| Easy to press / Difficult to press | Easy | Easy | Easy | Not easy | Easy | Easy | Easy | Easy | Easy |

**Table IV.**

| Varieties | CARACAS | CONTACT | CABRIOLET | CALIDA | SPIRAL | MSPO5 | MSP11 | ELANSOL | AURASOL |
|---|---|---|---|---|---|---|---|---|---|
| Crude oil, kg | 9,3 | 8,5 | 8,8 | 6,2 | 6,4 | 8,7 | 8,3 | 8,3 | 8,6 |
| Hexane content, % | 6,03 | 1,9 | 1,3 | 3,2 | 3,4 | 4,4 | 2,6 | 10,1 | 9,4 |
| Yield, % (*) | 97,9 | 99,9 | 99,5 | 93,8 | 99,6 | 97,1 | 97,6 | 93,2 | 98,3 |

| | | | | | | | | | |
|---|---|---|---|---|---|---|---|---|---|
| (*) based on the total oil content in the seeds. | | | | | | | | | |

**Table V.**

| Variety | CARACAS | CONTACT | CABRIOLET | CALIDA | SPIRAL | MSP05 | MSP11 | ELANSOL | AURASOL |
|---|---|---|---|---|---|---|---|---|---|
| Dry crude oil, g | 8,7 | 8,3 | 8,5 | 5,7 | 6,1 | 8,2 | 7,73 | 7,26 | 7,65 |
| H₃PO₄ at 75%, g | 17,4 | 16,7 | 17,1 | 11,4 | 12,3 | 16,5 | 15,5 | 14,5 | 15,3 |
| H₂O, g | 521 | 500 | 512 | 343 | 369 | 494 | 464 | 435 | 459 |
| Decantation | good | correct | good | correct | good | correct | correct | good | good |

**Table VI.**

| Variety: | CARACAS | CONTACT | CABRIOLET | CALIDA | SPIRAL | MSP05 | MSP11 |
|---|---|---|---|---|---|---|---|
| NaOH 98,63 %, g | 4,00 | 8,28 | 2,78 | 3,52 | 2,55 | 2,73 | 3,25 |
| H₂O, g | 521 | 500 | 512 | 343 | 369 | 494 | 464 |
| Washing steps | 3 | 5 | 4 | 4 | 5 | 3 | 4 |
| Phases separation | Good separation, aqueous phase very dark, interface with flocs | | | | | | |
| Degummed Oil, kg | 8.7 | 8.3 | 8.5 | 5.7 | 6,1 | 8.2 | 7,73 |
| Acid number of the degummed oil, mg KOH/g | 0,26 | 0,96 | 0,37 | 0,55 | 0,62 | 0,33 | 0,32 |
| Refined Oil. kg | 8.3 | 7.3 | 7.9 | 5.1 | 5,7 | 7.5 | 7,58 |
| Acid number of the refined oil, mg KOH/g | 0,17 | 0,27 | 0,14 | 0,17 | 0,15 | 0,12 | 0,13 |
| Yields, % | 95,4 | 87,9 | 92,9 | 89,5 | 93,4 | 91,5 | 98,0 |

**Table VII**

| Variety | CARACAS | CONTACT | CABRIOLET | CALIDA | SPIRAL | MSP05 | MSPH |
|---|---|---|---|---|---|---|---|
| Refined oil, g | 5160 | 4230 | 4806 | 4990 | 5600 | 4880 | 3684 |
| Acid number of the refined oil (mg de | 0,17 | 0,27 | 0,14 | 0,17 | 0,15 | 0,12 | 0,13 |
| Bleached Oil, g | 4930 | 4100 | 4514 | 4800 | 5430 | 4650 | 3508 |
| Acid number of the bleached oil (mg de KOH/g) | 0,22 | 0,32 | 0,22 | 0,2 | 0,25 | 0,20 | 0,20 |
| Yield, % | 95,5 | 96,9 | 93,9 | 96,2 | 97,0 | 95,3 | 95,2 |

**Table VIII**

| Fatty acids | CARACAS | CONTACT | CABRIOLET | CALIDA | SPIRAL | MSP05 | MSP11 | MSP13 | ELANSOL | AURASOL. |
|---|---|---|---|---|---|---|---|---|---|---|
| C16:0 Palmitic | 5,0 | 3,9 | 3,8 | 3,6 | 4,5 | 4,3 | 3,4 | 3,4 | 3,2 | 3,5 |
| C16:1 Palmitoleic | - | - | 0,2 | 0,1 | - | 0,3 | 0,3 | - | - | - |
| C18:0 Stearic | 1,6 | 1,6 | 1,6 | 1,6 | 1,9 | 1,6 | 2,1 | 1,6 | 4,6 | 4,1 |
| C18:1 Oleic | 63,2 | 73,4 | 76,9 | 63,2 | 64,1 | 75,9 | 84,9 | 83,4 | 88,0 | 89,6 |
| C18:2 Linoleic | 17,7 | 9,3 | 8,0 | 28,7 | 25,0 | 12,8 | 5,5 | 8,6 | 2,5 | 1,8 |
| C18:3 (n-6) gamma Linolenic | - | - | - | - | - | - | - | - | - | - |
| C18:3 (n-3) alpha Linolenic | 10,6 | 9,8 | 7,9 | 0,8 | 2,4 | 2,8 | 2,0 | 1,4 | - | |
| C20:0 Arachidic | 0,6 | 0,5 | 0,2 | 0,5 | 0,6 | 0,6 | 0,6 | 0,4 | 0,2 | |
| C20:1 Eicosenoic | 1,0 | 1,1 | 1,0 | 1,1 | 0,9 | 1,1 | 1,1 | 1,1 | 0,1 | - |
| C22:0 Behenic | 0,3 | 0,4 | 0,5 | 0,3 | 0,4 | 0,4 | - | 0,2 | 0,8 | 0,8 |
| C22:1 Erucic | - | 0,1 | - | 0,2 | 0,2 | 0,2 | - | - | - | - |
| C24:0 Lignoceric | - | - | - | - | 0,2 | - | - | - | | - |
| C24:1 Nervonic | - | - | - | - | - | - | - | | | - |
| Others | - | - | - | - | - | - | 0,2 | - | 0,6 | 0,2 |
| Total | 100 | 100 | 100 | 100 | 100 | 100 | 100 | 100 | 100 | 100 |
| | | | | | | | | | | |
| Saturated acid | 7,5 | 6,3 | 6,0 | 5,9 | 7,4 | 6,9 | 6,1 | 5,5 | 8,8 | 8,4 |
| Mono-unsaturated acid | 64,2 | 74,6 | 78,1 | 64,6 | 65,2 | 77,6 | 86,3 | 84,5 | 88,1 | 89,6 |
| Poly-unsaturated acid | 28,4 | 19,1 | 15,9 | 29,5 | 27,3 | 15,5 | 7,5 | 9,9 | 2,5 | 1,8 |

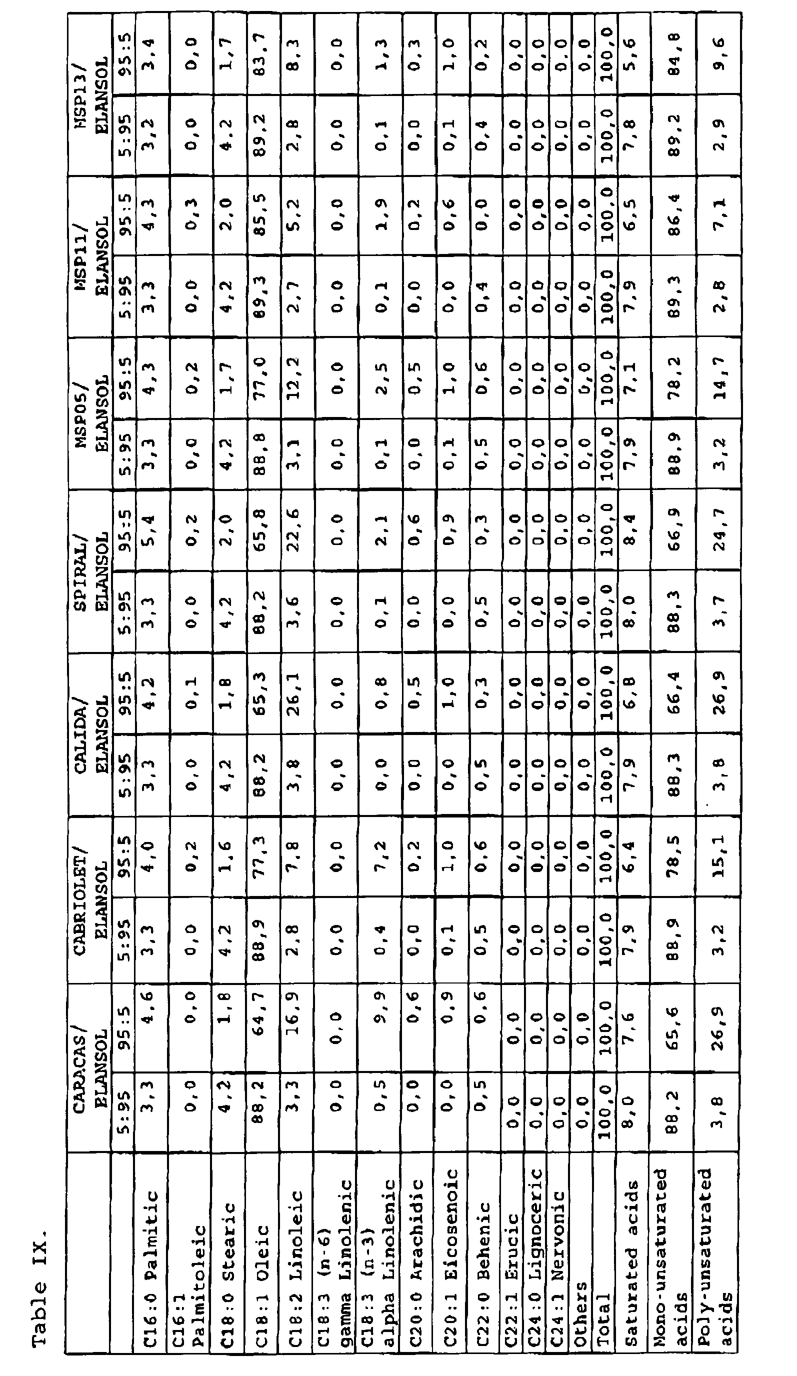

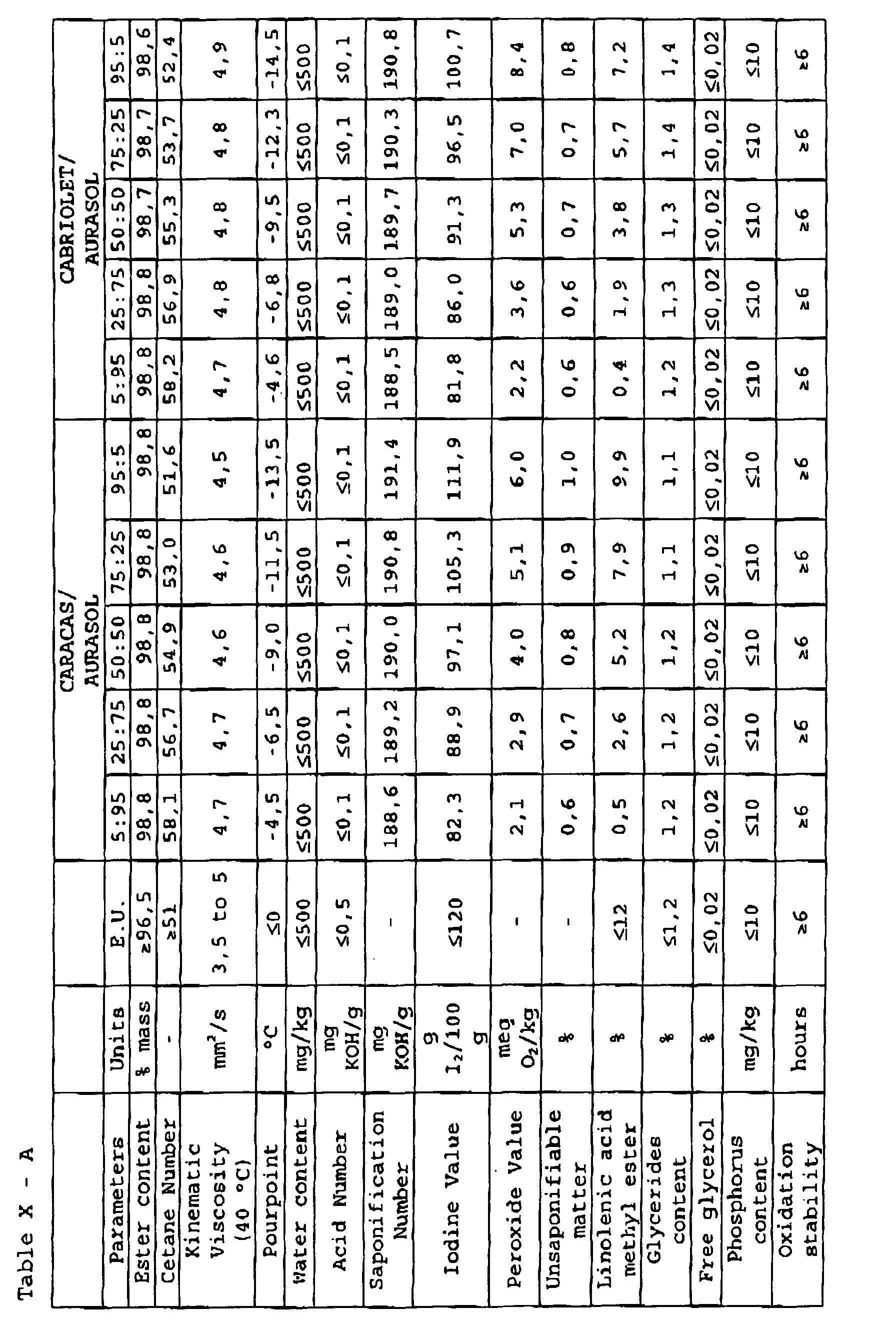

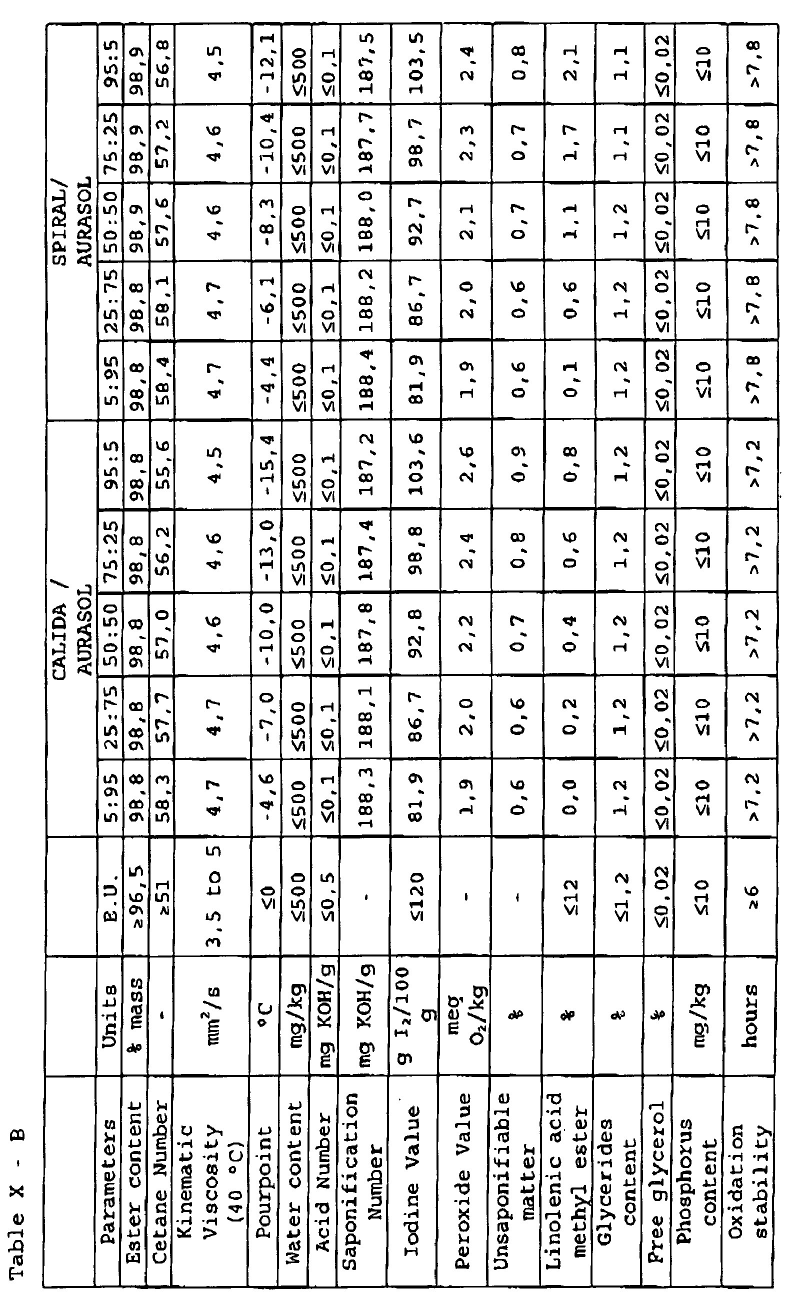

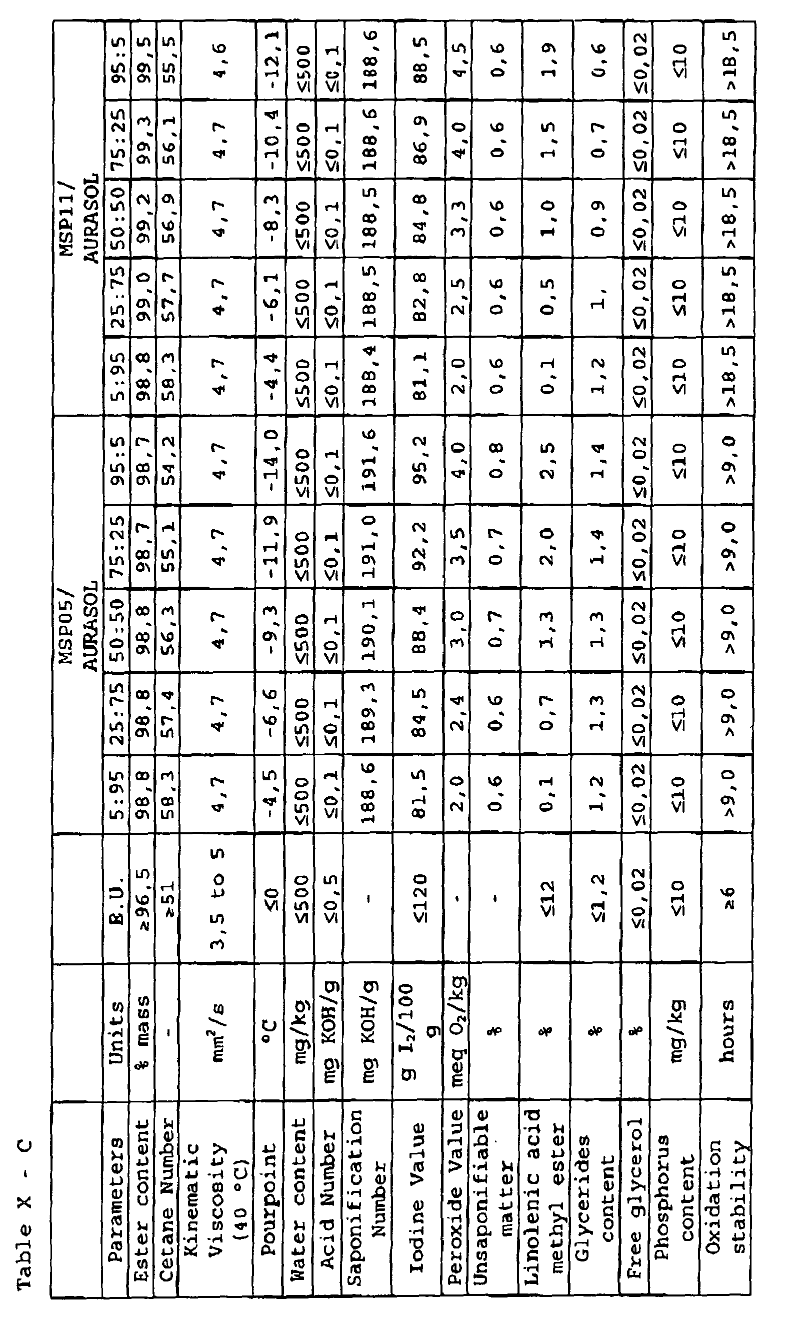

**Table X - D**

| | | | **MSP13/AURASOL** | | | | |
|---|---|---|---|---|---|---|---|
| Parameters | Units | E.U. | 5:95 | 25:75 | 50:50 | 75:25 | 95:5 |
| Ester content | % mass | ≥96,5 | 98,8 | 98,9 | 98,9 | 99,0 | 99,0 |
| Cetane Number | - | ≥51 | 58,4 | 58,2 | 57,9 | 57,5 | 57,3 |
| Kinematic Viscosity (40 °C) | mm²/s | 3,5 to 5 | 4,7 | 4,7 | 4,7 | 4,7 | 4,7 |
| Pourpoint | °C | ≤0 | -4,6 | -6,8 | -9,5 | -12,3 | -14,5 |
| Water content | mg/kg | ≤500 | ≤500 | ≤500 | ≤500 | ≤500 | ≤500 |
| Acid Number | mg KOH/g | ≤0,5 | ≤0,1 | ≤0,1 | ≤0,1 | ≤0,1 | ≤0,1 |
| Saponification Number | mg KOH/g | - | 188,3 | 187, | 7 187,1 | 186,4 | 185, 8 |
| Iodine Value | g I₂/100 g | ≤120 | 81,3 | 83,5 | 86,2 | 89,0 | 91,2 |
| Peroxide Value | meg | - | 1,9 | 1,9 | 2,0 | 2,1 | 2,1 |
| Unsaponifiable matter | % | - | 0,6 | 0,6 | 0,6 | 0,6 | 0,6 |
| Linolenic acid methyl ester | % | ≤12 | 0,1 | 0,3 | 0,7 | 1,0 | 1,3 |
| Glycerides content | % | ≤1,2 | 1,2 | 1,2 | 1,1 | 1,1 | 1,0 |
| Free glycerol | % | ≤0.02 | ≤0,02 | ≤0,02 | ≤0,02 | ≤0,02 | ≤0,02 |
| Phosphorus content | mg/kg | ≤10 | ≤10 | ≤10 | ≤10 | ≤10 | ≤10 |
| Oxidation stability | hours | ≤6 | ≤16,2 | ≤16,2 | >16,2 | ≤16,2 | ≤16,2 |

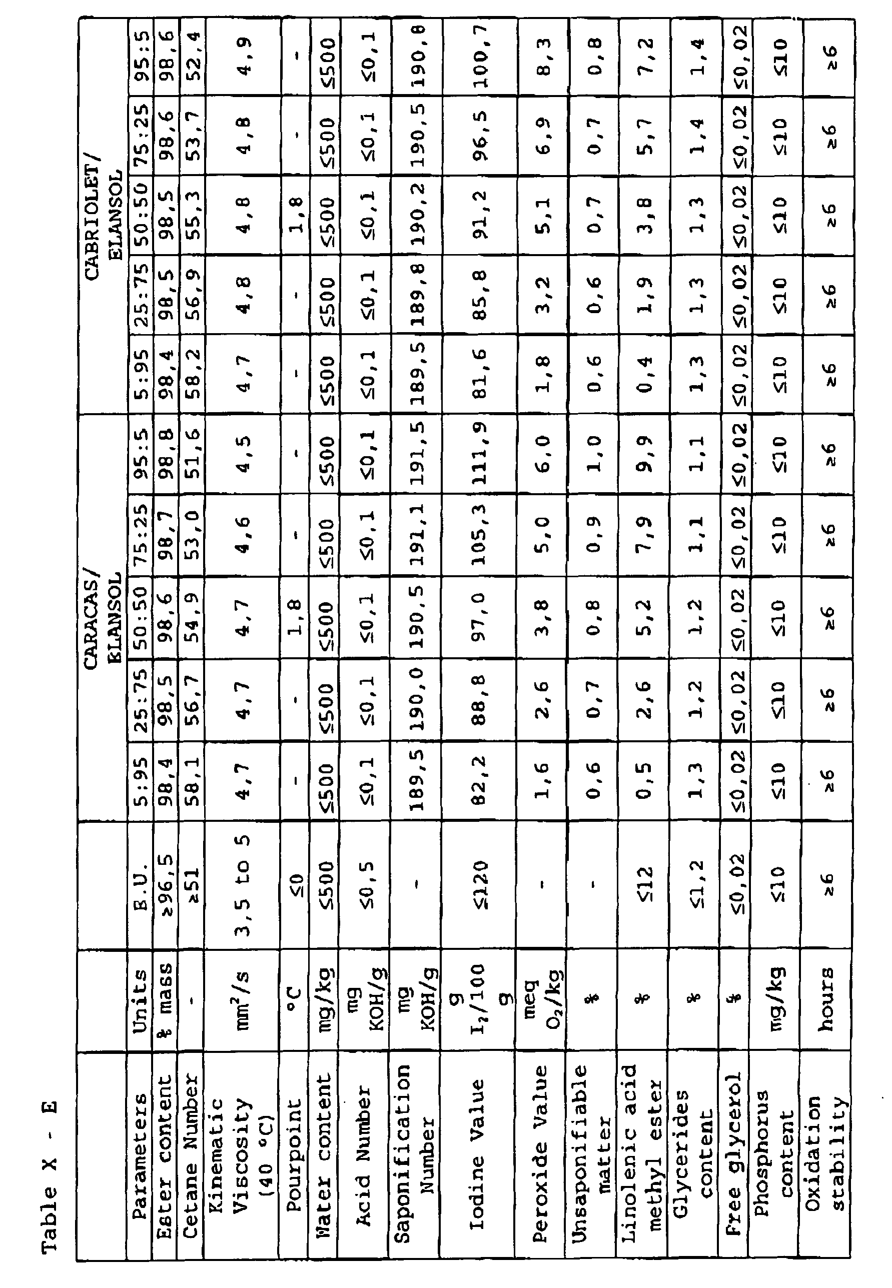

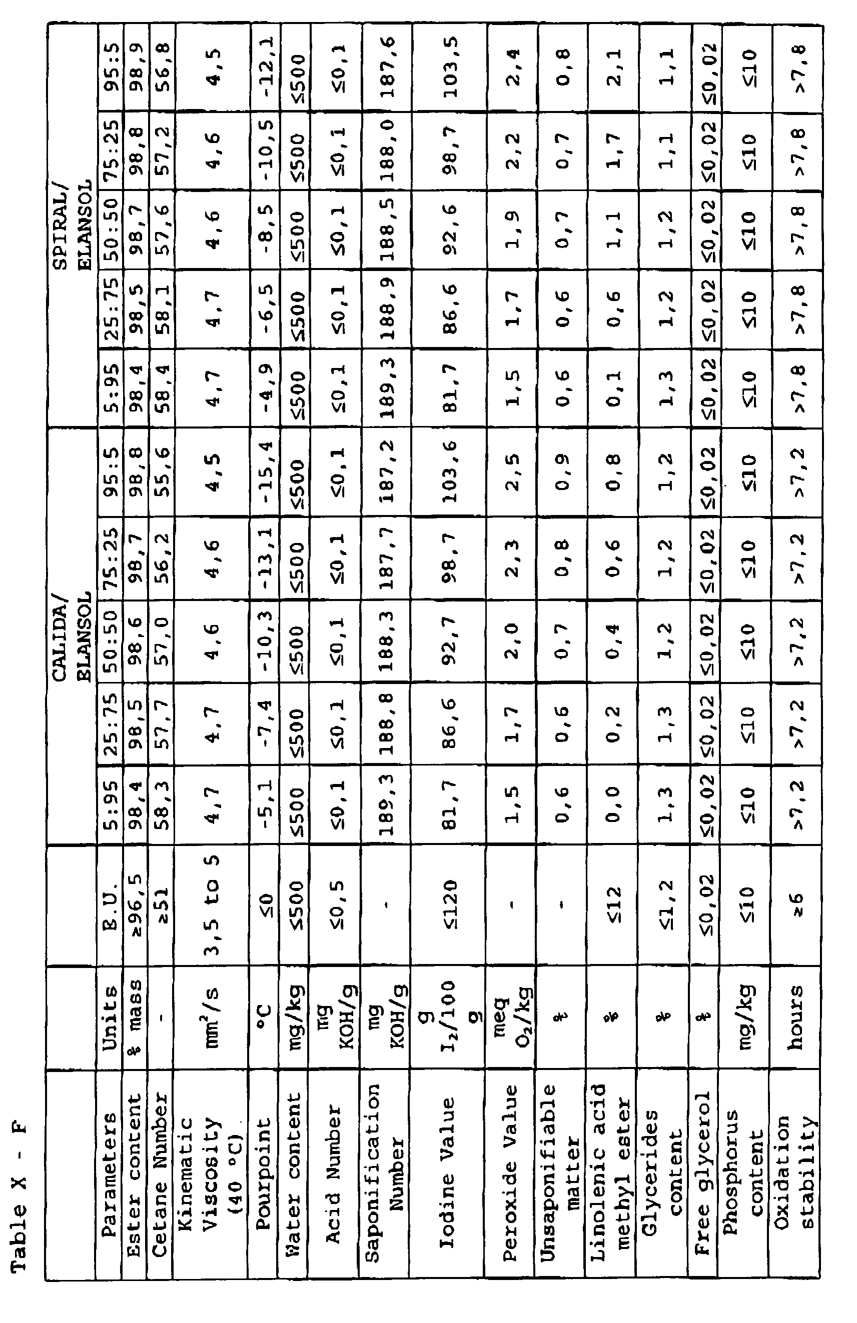

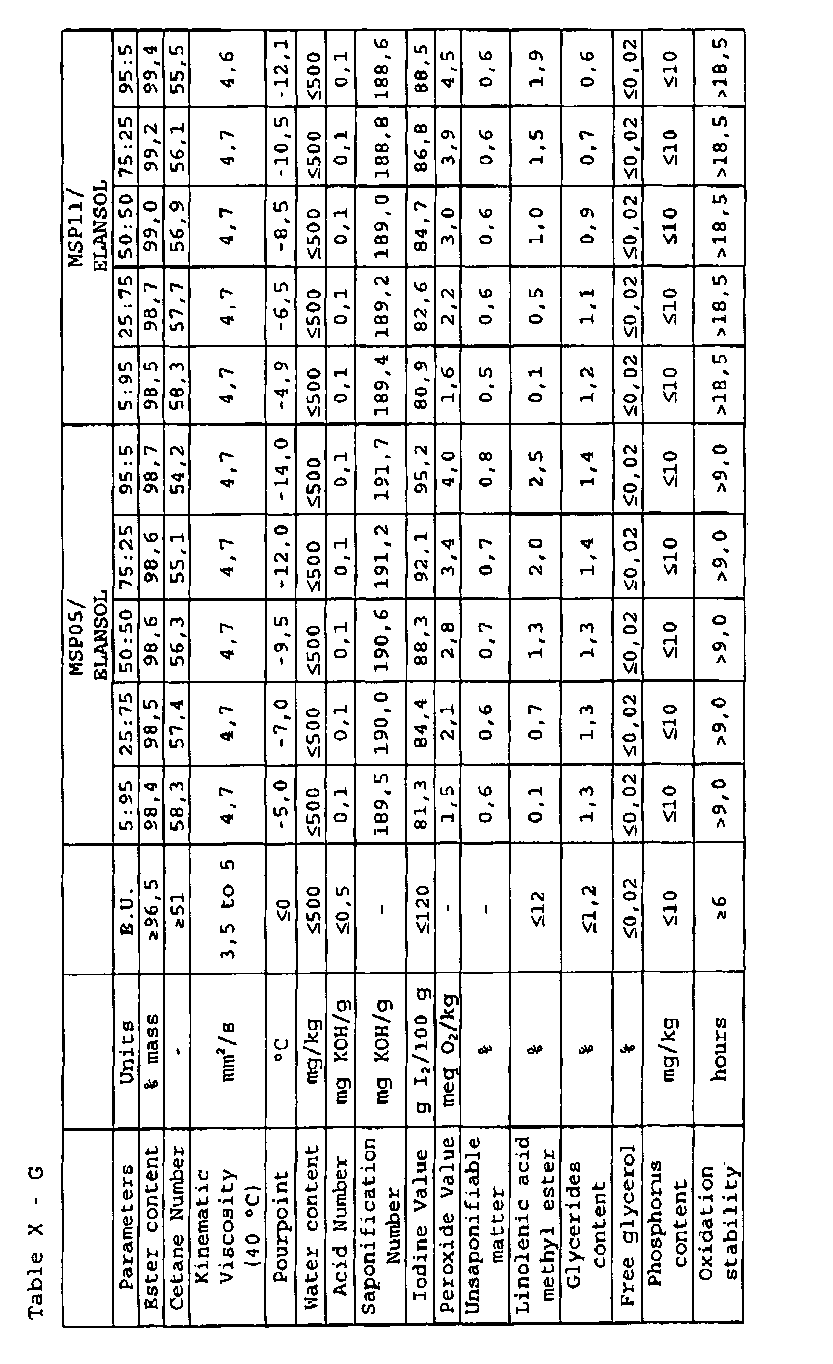

**Table X - H**

| | | | MSP13/ ELANSOL | | | | |
|---|---|---|---|---|---|---|---|
| Parameters | Units | E.U. | 5:95 | 25:75 | 50:50 | 75:25 | 95:5 |
| Ester content | % mass | ≥96,5 | 98,4 | 98,6 | 98,7 | 98,9 | 99,0 |
| Cetane Number | - | ≥51 | 58,4 | 58,2 | 57,9 | 57,5 | 57,3 |
| Kinematic Viscosity (40 °C) | mm²/s | 3.5 to 5 | 4,7 | 4,7 | 4,7 | 4,7 | 4,7 |
| Pourpoint | °C | ≤50 | -5,0 | -7,1 | -9,8 | -12,4 | -14,5 |
| Water content | mg/kg | ≤500 | ≤500 | ≤500 | ≤500 | ≤500 | ≤500 |
| Acid Number | mg KOH/g | ≤0,5 | 0,1 | 0,1 | 0,1 | 0,1 | 0,1 |
| Saponification Number | mg KOH/g | - | 189,2 | 188,5 | 187,6 | 186,6 | 185,9 |
| Iodine Value | g I₂/100 g | ≤120 | 81,1 | 83,3 | 86,1 | 88,9 | 91,1 |
| Peroxide Value | meg O₂/kg | - | 1,4 | 1,6 | 1,8 | 1,9 | 2,1 |
| Unsaponifiable matter | % | - | 0,5 | 0,6 | 0,6 | 0,6 | 0,6 |
| Linolenic acid methyl ester | % | ≤12 | 0,1 | 0,3 | 0,7 | 1,0 | 1,3 |
| Glycerides content | % | ≤1,2 | 1,3 | 1,2 | 1,1 | 1,1 | 1,0 |
| Free glycerol | % | ≤0,02 | ≤0.02 | ≤0,02 | ≤0,02 | ≤0,02 | ≤0,02 |
| Phosphorus content | mg/kg | ≤10 | ≤10 | ≤10 | ≤10 | ≤10 | ≤10 |
| Oxidation stability | hours | ≥6 | >16,2 | >16,2 | >16,2 | >16,2 | >16,2 |

## Claims

1. Alkyl-ester composition derived from rapeseed oil and sunflower oil comprising less than 7,5%, 7%, 6,5%, 6% or 5,5% mono-alkyl-ester(s) of saturated fatty acids, based on the total weight of mono-alkyl-esters of fatty acids in the composition.

2. Alkyl-ester composition according to claim 1 further comprising more than 72%, 75%, 80%, 85% or 89% of mono-alkyl ester(s) of oleic acid, based on the total weight of mono-alkyl-esters of fatty acids in the composition.

3. Alkyl-ester composition according to claim 1 or 2 further comprising less than 4%, 3,5%, 3%, 2,5%, 2%, 1,5%, 1%, or 0,5% of mono-alkyl ester (s) of linolenic acid, based on the total weight of mono-alkyl-esters of fatty acids in the composition.

4. Alkyl-ester composition according to any of claims 1 to 3 wherein said mono-alkyl esters of saturated fatty acids comprise less than 4,5% or 3,5% of alkyl-ester(s) of palmitic acid, based on the total weight of mono-alkyl-esters of fatty acids in the composition.

5. Alkyl-ester composition according to any of claims 1 to 4 further comprising less than 15%, 10%, 5%, 4% or 3% of mono-alkyl ester(s) of linoleic acid or less than 20%, 15%, 10%, 5% or 4% of mono-alkyl ester(s) of poly-unsaturated fatty acids, based on the total weight of mono-alkyl-esters of fatty acids in the composition.

6. Alkyl-ester composition according to any of claims 1 to 5 wherein said mono-alkyl esters are methyl esters.

7. Alkyl-ester composition according to any of claims 1 to 5 wherein said mono-alkyl esters are ethyl esters.

8. Process for the preparation of an alkyl-ester composition comprising a transesterification step of a blend of rapeseed oil and sunflower oil, the ratio of rapeseed oil to sunflower oil being such that a blend of both oils comprises less than 7,5%, 7%, 6,5%, 6% or 5,5% of saturated fatty acids, based on the total weight of the fatty acids in the oil.

9. Process for the preparation of an alkyl-ester composition comprising a transesterification step of an oil extracted from at least one variety or species of rapeseed and a transesterification step of an oil extracted from at least one variety or species of sunflower, wherein the ratio of rapeseed oil to sunflower oil is selected such that, if they were mixed, a blend of both oils would comprise less than 7,5%, 7%, 6,5%, 6% or 5,5% of saturated fatty acids, based on the total weight of the fatty acids in the oil.

10. Process for the preparation of an alkyl-ester composition according to claim 8 or 9 wherein said blend of oil further comprises more than 72%; 75%, 80%, or 85% of oleic acid, and/or less than 4%, 3,5%, 3%, 2%, 1%, or 0,5% of linolenic acid, based on the total weight of the fatty acids in the blend of oil.

11. A process according to any of claims 8 to 10 wherein said saturated fatty acids comprise less than 4,5% or 3,5% of palmitic acid, based on the total weight of the fatty acids in the blend of oil.

12. A process according to any of claims 8 to 11 wherein the transesterification step(s) consist(s) of (a) methanolyse step(s).

13. A process according to claim 12 wherein the methanolyse step(s) consist(s) of a base catalysed methanolyse of the oil.

14. A process according to claim 12 wherein the methanolyse scep(s) consist(s) of a direct acid catalysed methanolyse of the oil.

15. A process according to claim 12 wherein the methanolyse stap(s) consist(s) first in the conversion of the oil to its fatty acids and then in the conversion of said fatty acids to methyl esters of fatty acids.

16. A process according to any of claims 8 to 15 comprising, before the transesterification step(s), the steps of degumming the crude oil, and of refining the resulting oil.

17. A process according to claim 16 comprising the step of bleaching the oil after the refining step and before the transesterification step(s).

18. A process according to any of claims 8 to 17 wherein the rapeseed oil is extracted from one, two, three, four, five six, seven or eight of the varieties that are selected from the group consisting of the CARACAS variety, the CONTACT variety, the CABRIOLET variety, the CALIDA variety, the SPIRAL variety, the MSP05 variety, the MSP11 variety and the MSP13 variety.

19. A process according to any of claims 8 to 18 wherein the sunflower oil is extracted from ELANSOL variety and/or AURASOL variety.

20. Alkyl-ester composition obtainable by a process according to any of claims 8 to 19.

21. Use of an alkyl-ester composition of any of claims 1 to 7 or claim 20 as biodiesel.
